# EUROPEAN PATENT SPECIFICATION

(11) **EP 1 362 804 B1**
(45) Date of publication and mention of the grant of the patent: **08.02.2006**
(21) Application number: 03075697.7
(22) Date of filing: 10.03.2003
(51) Int. Cl.: B65G 17/00, B65G 17/34, B65G 47/34

(54) **Conveyer system and method for conveying products**
Fördervorrichtung und Verfahren zum Fördern von Produkten
Installation de transport et méthode pour transporter des produits

(30) Priority: 13.03.2002 NL 1020166
(43) Date of publication of application: 19.11.2003
(73) Proprietor: VANDERLANDE INDUSTRIES NEDERLAND B.V., NL-5466 RB Veghel (NL)
(72) Inventor: Van den Goor, Jacobus Marie, 5674 SH Nuenen (NL)
(74) Representative: Dorna, Peter

(56) References cited:
- EP-A- 0 456 297
- FR-A- 2 805 530
- NL-A- 9 800 010
- US-A- 3 550 748

## Description

The invention relates to a conveyor system for conveying products, which conveyor system comprises carriers for carrying products, in particular pieces of luggage, a first conveyor moving along a first. conveying path for conveying the carriers along said first conveying path, at least some of which carriers comprise a sub-conveyor for conveying the products carried by the carriers in question in a direction perpendicular to the first conveying path, and driving means for driving said sub-conveyor.

Such a conveyor system is known from US patent No 3,550,748. The conveyor system described therein comprises trolleys which are each connected to two parallel, narrow conveyor belts at the location of two downward facing, longitudinally extending U-shaped recesses. The trolleys themselves are fitted with a wide conveyor belt, on which packages can be supported, which packages can be conveyed in transverse direction by driving the wide conveyor belt, so as to unload the products in question from the trolley. The cross conveyor is driven by means of a cylindrical cam follower, with which every trolley is fitted. Said cam follower extends under the two narrow, parallel conveyor belts by means of which the trolley is conveyed, and it is arranged to mate with actuators disposed under said narrow, parallel conveyor belts, so that the cylindrical cam follower is moved from a central position to the left, to the right or not at all by suitably driving said actuators, thus moving the transverse conveyor belt to the right, to the left or not at all, respectively. In this way a package can be discharged in a desired transverse direction at a desired position.

Such a conveyor system has various drawbacks. In the first place it is noted in this connection that the conveyor system according to the prior art is only suitable for use in relatively simple logistic systems, which comprise one conveying path with a number of unloading positions positioned along said path. In addition to that, the use of the cylindrical cam follower in combination with the actuators imposes major restrictions as regards the possible embodiments of the conveyor by means of which the trolley itself is moved. Furthermore, the connection of the trolleys to the two parallel, narrow conveyor belts in fact effects a connection between trolleys positions adjacently to each other, so that it is not possible to buffer the trolleys, for example.

The above drawbacks of the conveyor system according to US patent No 3,550,748 and other factors render such a conveyor system unsuitable for a large number of applications, such as the handling of luggage at airports. Airports, especially the larger airports, frequently comprise a complex logistic network extending from the location where the luggage is checked in, which network is used for delivering said luggage at the correct destination. Said logistic network is made up of a complex of conveyors such as, in particular, belt conveyors and roller conveyors.

Basically, two systems can be distinguished in this connection. In the first system, the luggage is placed directly onto the conveyors in question and subsequently conveyed. The second system employs containers, into which the pieces of luggage can be placed and which are conveyed by means of the conveyors. An example of such a system is described in European patent EP-B-0 456 297. The use of the containers has this advantage that uniform objects are handled in the logistic system, which has a positive effect as regards the reliability with which the luggage is handled. This reliability, however, is harmed in part by the fact that in some cases the handling of the luggage in the logistic system involves repeated transfers of a piece of luggage from one container to another container, with the possible risk of errors.

FR-A-2 805 530 discloses an installation for transferring packages which comprises a single conveying path which splits into two conveying paths. Along these conveying paths carriages are conveyed which are guided by rails. Each carriage is provided with an endless transverse conveying belt for conveying packages supported on the conveying belts sideways towards separate, stationary intermediate transfer conveyors which are positioned between the adjacent conveying paths at a transfer zone.

The object of the invention is to provide a solution for the drawbacks of the prior art as described above, whether or not in preferred embodiments thereof, and to that end it provides a conveyor system according to the introduction, which is characterized in that the carriers can be moved from the first conveyor to a second conveyor, which moves along a second conveying path deviating from the first conveying path for conveying the carriers along the second conveying path. The invention is based on the inventive insight that, in spite of the fact that the carriers comprise a sub-conveyor that must be capable of being driven individually, it is possible to move such carriers from a first conveyor to a second conveyor. The presence of the sub-conveyor creates excellent sorting possibilities. Within the framework of the invention it is important to note that various conveyor types may be used both for the first and second conveyors and for the sub-conveyor, for example belt conveyors, roller conveyors or wheel conveyors. Such conveyors are generally known to those skilled in the art and require no further explanation herein.

A highly advantageous preferred embodiment of the conveyor system according to the invention is obtained if the carriers are loose on the first conveyor and/or the second conveyor. The fact is that this makes it possible to remove the carriers from the conveyor in question, if desired, for example for storage or repair at a different location. In addition, the carriers are inherently not interconnected, as a result of which a far greater logistic freedom in the handling of the products is obtained.

In order to maximise the number of possible embodiments of the first conveyor and the second conveyor, it is strongly preferred for the extreme bottom side of the carriers to be made up of at least one supporting surface, via which the carriers can rest on the first conveyor and/or the second conveyor. In addition, this makes it easier to stack carriers, if desired, when they are not being used.

A very stable embodiment, which can be used with a large number of embodiments of the first conveyor and the second conveyor, is obtained if said at least one supporting surface is made up of a central supporting surface extending over substantially the entire width of the first conveyor and/or the second conveyor.

A very advantageous situation is obtained if only some of the carriers that form part of the conveyor system according to the invention comprise a sub-conveyor. The fact is that the invention makes it possible to handle carriers fitted with a sub-conveyor and carriers not fitted with a sub-conveyor interchangeably. Thus a suitable type of carrier can be selected in dependence on, for example, the destination of the product to be conveyed. One can imagine in this connection that a carrier not fitted with a sub-conveyor is used for a product that is to be stored for a longer period of time, for example a few days, whereas products that are to be processed directly are conveyed on a carrier fitted with a sub-conveyor.

Although it is not excluded within the framework of the invention to use mechanical driving means, as is for example the case in US patent No 3,550,748 as discussed above, it is very advantageous if the conveyor system comprises providing means for providing electrical energy, which are disposed along the first conveyor and/or the second conveyor, and if the carriers fitted with said sub-conveyor comprise receiving means for receiving electrical energy provided by said providing means for supplying electrical power to the driving means. Such a transfer of electrical energy requires hardly if any constructional measures, which might limit the number of embodiments of the first conveyor and/or the second conveyor that can be used. It is important to note in this connection that the providing means only need to be present at those locations where it is necessary for a sub-conveyor to be driven by the driving means.

In order to prevent the occurrence of mechanical wear, it is preferred to realise a contactless transfer of electrical energy between the providing means and the receiving means. The means required for such a contactless transfer of electrical energy are already known to those skilled in the art and require no further explanation herein.

According to a very advantageous preferred embodiment, the providing means and the receiving means are also arranged for transferring electrical control signals for the driving means. This makes it possible to drive the sub-conveyor in the correct one of the two transverse directions, whilst in addition it is possible to control for example the velocity of the sub-conveyor, if desired.

The invention furthermore relates to a method for conveying products, comprising the steps of:
A providing a carrier fitted with a sub-conveyor by means of a first conveyor moving along a first conveying path arranged for conveying the carrier along said first conveying path,
B placing at least one product onto the sub-conveyor,
C conveying the carrier, with said at least one product present on the sub-conveyor thereof, to an unloading location, D unloading said at least one product from the carrier at said unloading location by driving said sub-conveyor.

Such a method is known from US patent No 3,550,748. The drawbacks of the method described therein correspond to the drawbacks of the device according to the aforesaid US patent that have already been discussed above. The object of the invention is to provide a method which offers a solution for these drawbacks, and in order to accomplish that objective the invention is characterized by moving the carrier from the first conveyor to a second conveyor moving along a second conveying path deviating from the first conveying path during step C for conveying the carrier with said at least one product present on the sub-conveyor thereof along said second conveying path.

The invention will be explained in more detail in a non-limitative sense hereinafter by means of a description of preferred embodiments of the invention, in which reference is made to the following schematic figures, in which like parts are indicated by corresponding numerals in so far as this will not give rise to confusion:
Figure 1a is a cross-sectional view of a first embodiment of a conveyor system according to the invention.
Figure 1b is a top plan view of the embodiment of Figure la.
Figure 2 is a top plan view of a part of a first embodiment of a layout of a conveyor system according to the invention.
Figure 3 is a top plan view of a part of a second embodiment of a layout of a conveyor system according to the invention.
Figure 4 shows a second preferred embodiment of a conveyor system according to the invention.
Figure 5 shows a third preferred embodiment of a conveyor system according to the invention.
Figure 6 shows a possible application of the conveyor system as shown in Figures 1a and 1b.
Figure 7 is a top plan view of a part of a third embodiment of a layout of a conveyor system according to the invention.
Figures 8a, 8b and 8c are cross-sectional views along the line VIII-VIII in Figure 7 of three different applications of the conveyor system according to Figure 7.

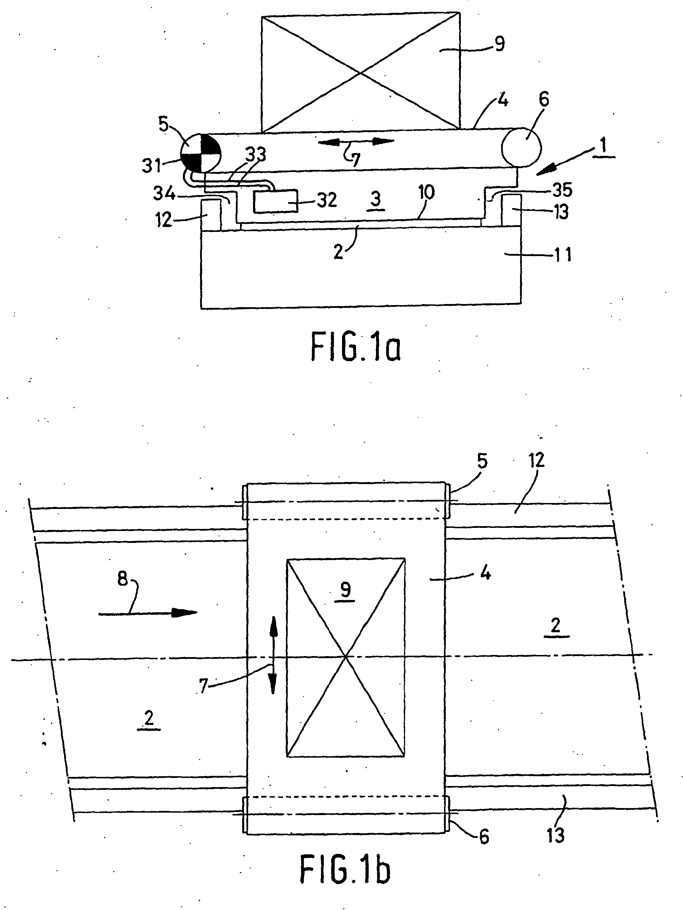

Figures 1a and 1b show a carrier 1 present on a conveyor belt 2. The carrier 1 comprises a chassis 3. Said chassis 3 supports an endless conveyor belt 4, which is passed over two pulleys 5, 6, of which the pulley 5 is connected to a tubular motor 31, which, upon being electrically energised, is capable of rotating the pulley 5 in two directions so as to move the conveyor belt 4 in a desired direction. The tubular motor is supplied with electric power from a battery 32, which forms part of the chassis 3. To this end, the battery 32 is connected to the tubular motor 31 by means of electric cables 33. The battery 32 may be exchangeable, so that the battery 32 can be exchanged for a fully charged battery 32 as soon as it is no longer able to supply sufficient power. Alternatively it is possible to recharge the battery 32 while it is present on the chassis 3, not only during periods that the carrier 1 is not in use, but even during operation, for example if the battery 32 is supplied with electric voltage via conductor rails extending along the conveying path.

The conveying direction of the endless conveyor belt 4, which is indicated by the double arrow 7, is oriented perpendicularly to the conveying direction of the conveyor belt 2, which is indicated by the single arrow 8. The upper part of the conveyor belt 4 supports a product 9, which product may be a piece of luggage, for example, such as a suitcase. The chassis 3 has a central flat bottom 10, so that it can be supported on the conveyor belt 2 and be conveyed by said conveyor belt 2 in a very stable manner. In addition to that, the central flat bottom also allows stacking of the carriers 1, for example, which may be useful in the case of storage of the carriers 1.

The conveyor belt 2 is supported by a supporting frame 11. Two retaining edges 12, 13 are present on the upper side of the supporting frame 11 on either side of the conveyor belt 2. The chassis 3 is provided with recesses 34, 35 at the location of said retaining edges 12, 13. When the retaining edges 12, 13 are raised, the chassis 3 and with it the carrier 1 containing the product 9 can be lifted off the conveyor belt 2, so that the conveyor belt 2 will continue to move under the carrier 1, whereas the carrier 1 itself will remain stationary.

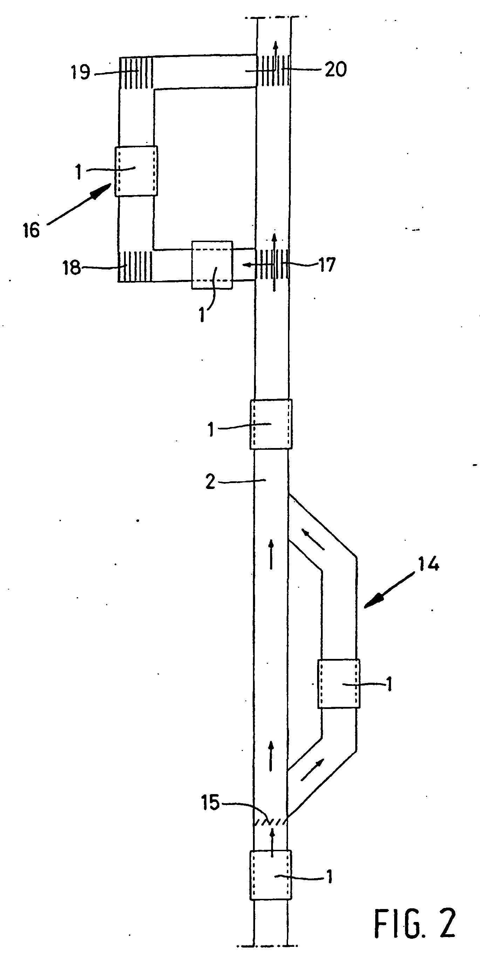

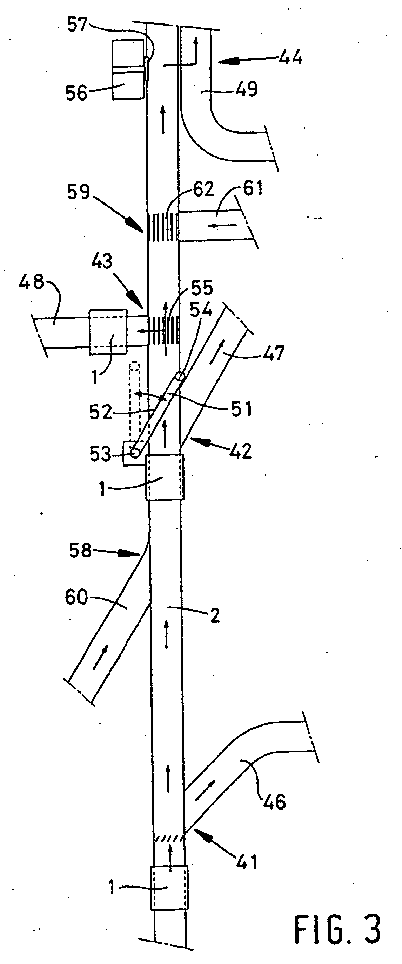

As is apparent in particular from Figure 1a, the conveyor belt 2, which may alternatively be configured as a roller conveyor or as a number of parallel conveyor belts within the framework of the invention, and the carrier 1 are not connected in any way. This unconnected position of the carrier 1 on the conveyor belt 2 makes it possible at all times to remove the carrier 1 from the conveyor belt 2. In addition to that, the fact that the carrier 1 is not fixedly connected to the conveyor belt 2 makes it altogether possible to divert the carrier 1 from the conveyor belt 2 to another conveyor belt at the location where conveyor belts branch off or converge. A layout of such a situation is shown in top plan view in Figures 2 and 3 by way of illustration.

In the situation as shown in Figure 2, a branched-off conveying path 14 is present at the beginning of the illustrated part of the conveying path, which branched-off conveying path 14 connects to the conveyor belt 2 at the beginning as well as at the end. It is noted - unnecessarily, since it is well-known to those skilled in the art - that in practice, and in particular in the case of longer conveying paths, the conveyor belt 2 will generally not be made up of one conveyor belt but rather of a number of conveyor belts joining each other. Diversion of a carrier 1 from the conveyor belt 2 takes place by means of obliquely oriented wheels 15, which are vertically movable so as to divert the carrier 1 to the conveying path 14 when occupying a raised position and leave the carrier 1 as it is, so that the carrier 1 will follow the path of the conveyor belt 2, when occupying a lowered position. This manner of diversion is known in general to those skilled in the art. Essential to the invention, however, is the fact that a carrier fitted with a cross conveyor is diverted, whereas carriers not fitted with a cross conveyor or loose products are diverted in the prior art.

At an upstream location, a second conveying path 16 branches off from the conveyor belt 2, albeit at right angles, and rejoins the conveyor belt 2 further upstream, likewise at right angles. Vertically movable rollers 17, 18, 19, 20 are disposed both in the path of the conveyor belt 2 and in the corner points of the branched-off conveying path 16 for effecting the right-angled diversion of the carriers 1. The manner in which the branched-off conveying paths 14, 16 branch off from and rejoin the conveyor belt 2 does not require any further explanation herein, since the techniques that are used for that purpose are already known, for example in the logistic handling of carriers not fitted with a cross conveyor.

Figure 3 shows another possible layout. Diversion of a carrier 1 to a conveyor 46, 47, 48 and 49 joining the conveyor belt 2 is possible at the locations 42, 43, 44 and 45, respectively. Within the framework of the invention, said conveyors 46, 47, 48, 49 may be conveyors of any suitable type, such as belt conveyors or roller conveyors. Vertically movable, obliquely oriented diversion wheels 50 corresponding to the wheels 15 in Figure 2 are disposed at the diversion location 41. Disposed at diversion location 42 is a diversion element 51, which can pivot in the path of a carrier 1 on the conveyor belt 2. The diversion element 51 comprises a diversion belt 52, which is passed over two pulleys 53, 54, which are interconnected by means of a frame. The pivoting movement of the diversion element 51 takes place about a vertical axis, which is coaxial with the axis of rotation of a pulley 53, via which pulley also the diversion belt 2 is driven for that matter. The diversion location 43 is characterized by the presence of vertically movable rollers 55 corresponding to the rollers 17 in Figure 2. Finally, a pushing device 56 comprising a pusher element 57 is present at the diversion location 44, by means of which carriers 1 can be pushed from the conveyor belt 2 to an adjacent, parallel path of the conveyor 49. It will be understood that the diversion of a carrier 1, if desired, from the conveyor belt 2 to another conveyor, such as the conveyors 46, 47, 48 of 49, for example in one of the manners as described above, takes place on the basis of control signals from a control system.

Numerals 58 and 59 indicate converging locations, where carriers 1 can be placed onto the conveyor belt 2 from conveyors 60, 61. At converging location 58, said conversion takes place in that the conveyor 60 and the conveyor 2 include the relatively small angle with each other and join each other. The converging location 59 is similar to the situation at the location of the rollers 20 in Figure 2. Consequently, vertically movable rollers 62 are present at that location.

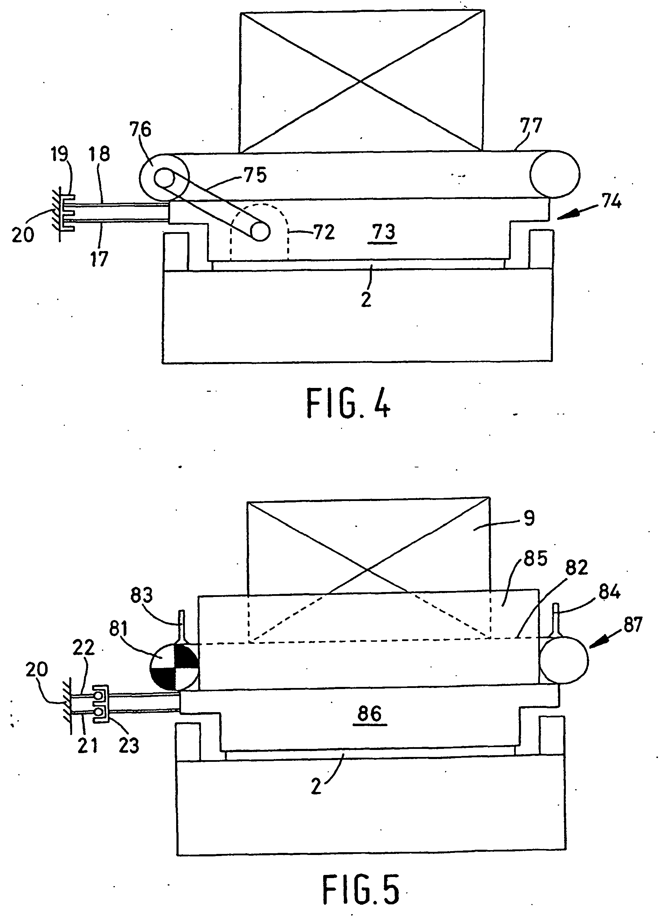

Figure 4 shows an embodiment of a conveyor system according to the invention, which is slightly modified in comparison with the embodiment that is shown in Figure 1, in which the transfer of electrical energy takes place by means of sliding contacts 17, 18, which are fixed to the chassis 3 of the carrier 1. A battery need not be provided in that case. The sliding contacts 17, 18 are in sliding contacts with a conductor rail 19, which is fixed to a permanent structure 20. The supply of electric power to the electric motor 72 can take place via the conductor rail 19 and the sliding contacts 17, 18. The electric motor 72, which is fixed to the chassis 73 of the carrier 74, drives the pulley 76, over which the cross conveyor 77 is passed, via the pulley 75.

In the embodiment according to Figure 5, the transfer of energy takes place in a contactless manner rather than by means of sliding contacts. Two electric wires 21, 22 are used, which wires are fixedly connected to the permanent structure 20 and which extend along the conveying path of the conveyor belt 2. Present in the immediate vicinity of the electric wires 21, 22 is a current collecting coil 23, which is electrically connected to the tubular motor 81, which is similar to the tubular motor 31 in Figure la. Such a contactless manner of energy transfer is known to those skilled in the art and requires no further explanation herein. The embodiment that is shown in Figure 5 is furthermore different from the embodiments that are shown in Figures 1a/1b and Figure 4 in that it comprises means for preventing products from undesirably moving off the cross conveyor 82. In the concrete, said means are upright edges 83, 84, which are attached to the conveyor belt 82 and between which the product 9 can be retained. In particular in the case of products that can roll (for example a rolled-up sleeping bag or a soccer ball) there is a risk that such products will not move with the conveyor belt 82. Upright edges 83, 84 ensure that this will take place to a sufficient extent. The aforesaid means comprise further upright edges, of which only the upright edge 85 is shown in Figure 5, which upright edges extend parallel to the direction of movement of the cross conveyor 82, on either side of the cross conveyor 82. The upright edges are fixed to the chassis 86 of the associated carrier 87.

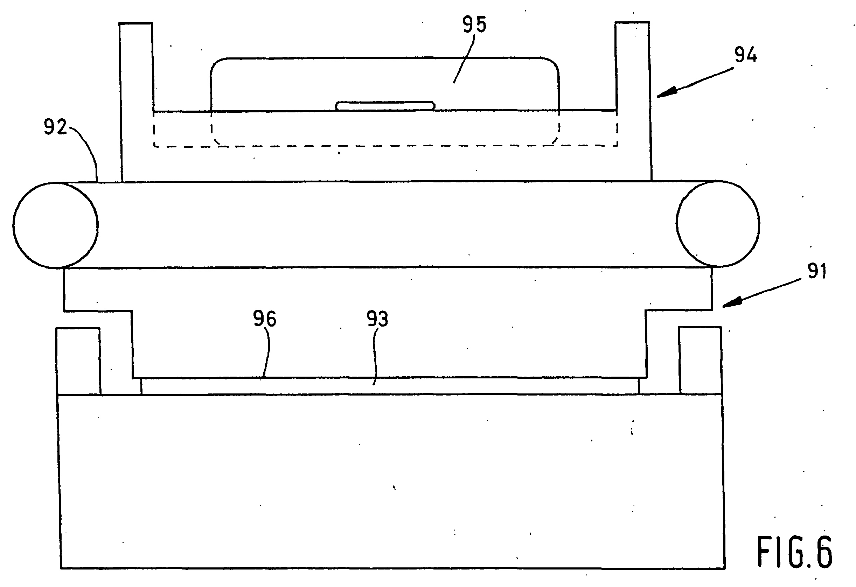

It is very important to note that is quite possible within the framework of the invention to use carriers fitted with a cross conveyor and carriers not fitted with a cross conveyor interchangeably, depending on the destination of the product present on the carrier. Thus, a very special application is shown in Figure 6. The figure shows a carrier 91 fitted with a cross conveyor 92, which carrier 91 stands loose on the conveyor belt 93. Refer to Figures 1a/1b, 4 and 5 for examples thereof. The carrier 91 carries another carrier 94 on its conveyor belt 92, which carrier 94 is not fitted with a cross conveyor. The carrier 94 is box-shaped and accommodates a suitcase 95. Such a configuration may be very advantageous, for example if the suitcase 95 is to be stored in a high-rise rack for a prolonged period of time (a few days, for example). After the carrier 91 supporting the other carrier 94 with the suitcase 95 has been placed on a lift, which is movable along the high-rise rack, which can be effected very easily because of the flat bottom 96 of the carrier 91, the lift will move the carrier 91 to a position just before the desired storage position of the suitcase 95, where said other carrier 94 containing the suitcase 95 is stored in the high-rise rack when the conveyor belt 92 is driven. The above operations take place in reverse order when the other carrier 94 containing the suitcase 95 is removed from the high-rise rack again.

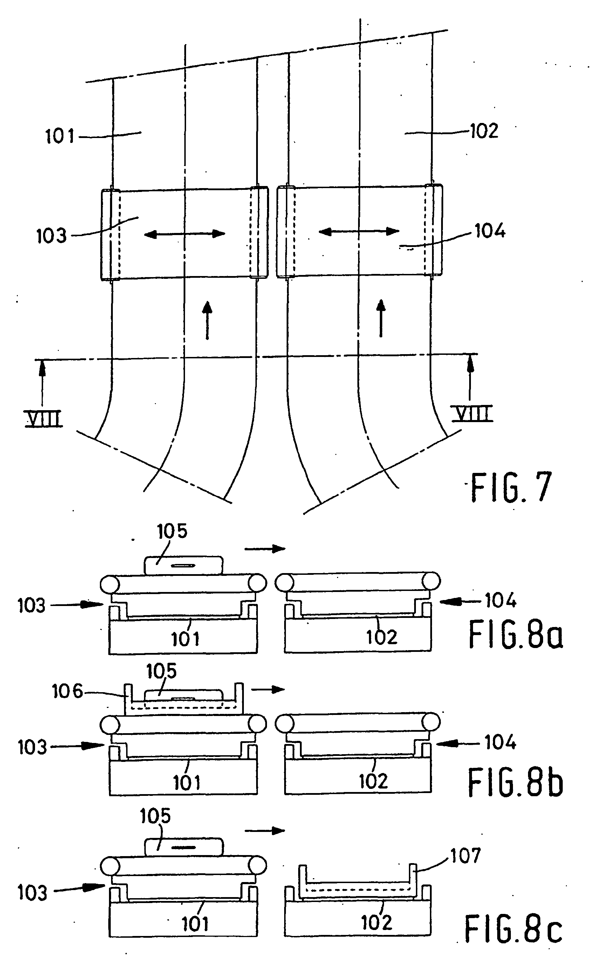

In addition to transferring products together with the supporting carrier fitted with a cross conveyor, it is also possible within the framework of the invention to transfer products from one carrier present on a first conveyor to a second carrier present on a second conveyor. It is precisely this possibility that gives the conveyor system its unique flexibility. Figures 7 and 8a, 8b and 8c show examples thereof. Figure 7 shows in top plan view a first and a second conveyor belt 101, 102 with a first carrier 102 and a second carrier 104, respectively, present thereon. The two conveyor belts partially extend parallel to each other, right next to each other. This makes it possible to transfer a product, such as the suitcase 105 that is shown in Figures 8a, 8b or 8c, from the first carrier 103 to the second carrier 104, while the conveyor belts 101, 102 keep moving, if desired, by driving the cross conveyors of the respective carriers 103, 104 in one and the same direction. Figure 8a shows how the suitcase 105, which is loose on the cross conveyor belt of the carrier 103, is transferred to the carrier 104. In Figure 8b the suitcase 105 is accommodated in a further box-shaped carrier 106, similar to the carrier 94 that is shown in Figure 6, during said transfer. In the situation that is shown in Figure 8c, the carrier 104 has been exchanged for a carrier such as the carrier 106 in Figure 8b. Transfer of the suitcase 105 thus takes place from the carrier 103 to the carrier 107.

## Claims

1. , A conveyor system for conveying products (9; 95), which conveyor system comprises carriers for carrying products (1; 91), in particular pieces of luggage, a first conveyor (2) moving along a first conveying path for conveying the carriers along said first conveying path, at least some of which carriers comprise a sub-conveyor (4) for conveying the products carried by the carriers in question in a direction perpendicular to the first conveying path, and driving means (3-33; 72, 75; 81) for driving said sub-conveyor, **characterized in that** the carriers can be moved from the first conveyor to a second conveyor, which moves along a second conveying path deviating from the first conveying path for conveying the carriers along the second conveying path.

2. A conveyor system according to claim 1, **characterized in that** the carriers are loose on the first conveyor and/or the second conveyor.

3. A conveyor system according to claim 1 or 2, **characterized in that** the extreme bottom side (10) of the carriers is made up of at least one supporting surface (10), via which the carriers can rest on the first conveyor and/or the second conveyor (2; 93).

4. A conveyor system according to claim 3, **characterized in that** said at least one supporting surface is made up of a central supporting surface extending over substantially the entire width of the first conveyor and/or the second conveyor.

5. A conveyor system according to claim 1, 2, 3 or 4, **characterized in that** only some of the carriers comprise a sub-conveyor.

6. A conveyor system according to any one of the preceding claims, **characterized in that** the conveyor system comprises providing means (19; 21, 22) for providing electrical energy, which are disposed along the first conveyor and/or the second conveyor, and the carriers fitted with said sub-conveyor comprising receiving means (17, 18; 23) for receiving electrical energy provided by said providing means for supplying electrical power to the driving means.

7. A conveyor system according to claim 6, **characterized in that** the transfer of electrical energy between said providing means and said receiving means takes place in a contactless manner.

8. A conveyor system according to claim 6 or 7, **characterized in that** the providing means and the receiving means are also arranged for transferring electrical control signals for the driving means.

9. A conveyor system according to any one of the preceding claims, **characterized in that** the second conveyor joins the first conveyor.

10. A method for conveying products, comprising the steps of:
A providing a carrier fitted with a sub-conveyor by means of a first conveyor moving along a first conveying path arranged for conveying the carrier along said first conveying path,
B placing at least one product onto the sub-conveyor,
C conveying the carrier, with said at least one product present on the sub-conveyor thereof, to an unloading location,
D unloading said at least one product from the carrier at said unloading location by driving said sub-conveyor,
**characterized by** the step of
E moving the carrier from the first conveyor to a second conveyor moving along a second conveying path deviating from the first conveying path during step C for conveying the carrier with said at least one product present on the sub-conveyor thereof along said second conveying path.

## Patentansprüche

1. Fördersystem zum Fördern von Produkten (9; 95), welches Fördersystem Träger zum Tragen von Produkten (1; 9), insbesondere Gepäckstücken, eine erste Fördereinrichtung (2), die sich entlang einem ersten Förderweg zum Fördern der Träger entlang dem ersten Förderweg bewegt, wobei mindestens einige der Träger eine untergeordnete Fördereinrichtung (4) zum Fördern der von den besagten Trägern getragenen Produkte in einer zu dem ersten Förderweg senkrechten Richtung aufweisen, und eine Antriebseinrichtung (31-33; 72, 75; 81) zum Antreiben der untergeordneten Fördereinrichtung aufweist, **dadurch gekennzeichnet, dass** die Träger von der ersten Fördereinrichtung zu einer zweiten Fördereinrichtung bewegt werden können, die sich entlang einem zweiten Förderweg bewegt, der von dem ersten Förderweg abweicht, um die Träger entlang dem zweiten Förderweg zu fördern.

2. Fördersystem nach Anspruch 1, **dadurch gekennzeichnet, dass** die Träger auf der ersten Fördereinrichtung und/oder der zweiten Fördereinrichtung lose sind.

3. Fördersystem nach Anspruch 1 oder 2, **dadurch gekennzeichnet, dass** die äußerste Unterseite (10) der Träger aus mindestens einer Tragoberfläche (10) gebildet ist, mittels welcher die Träger auf der ersten Fördereinrichtung und/oder der zweiten Fördereinrichtung (2; 93) aufliegen können.

4. Fördersystem nach Anspruch 3, **dadurch gekennzeichnet, dass** die mindestens eine Tragoberfläche aus einer zentralen Tragoberfläche gebildet ist, die sich im wesentlichen über die gesamte Breite der ersten Fördereinrichtung und/oder der zweiten Fördereinrichtung erstreckt.

5. Fördersystem nach Anspruch 1, 2, 3 oder 4, **dadurch gekennzeichnet, dass** nur einige der Träger eine untergeordnete Fördereinrichtung aufweisen.

6. Fördersystem nach einem der vorstehenden Ansprüche, **dadurch gekennzeichnet, dass** das Fördersystem Versorgungseinrichtungen (19; 21, 22) zur Versorgung mit elektrischer Energie aufweist, die entlang der ersten Fördereinrichtung und/oder der zweiten Fördereinrichtung angeordnet sind, und die mit den untergeordneten Fördereinrichtungen ausgerüsteten Träger Empfangseinrichtungen (17, 18; 23) zum Empfangen von elektrischer Energie, die von den Versorgungseinrichtungen bereitgestellt wird, zur Zufuhr von elektrischer Leistung zu der Antriebseinrichtung aufweisen.

7. Fördersystem nach Anspruch 6, **dadurch gekennzeichnet, dass** die Übertragung von elektrischer Energie zwischen den Versorgungseinrichtungen und den Empfangseinrichtungen in kontaktloser Weise stattfindet.

8. Fördersystem nach Anspruch 6 oder 7, **dadurch gekennzeichnet, dass** die Versorgungseinrichtungen und die Empfangseinrichtungen auch zur Übertragung von elektrischen Steuersignalen für die Antriebseinrichtung ausgelegt sind.

9. Fördersystem nach einem der vorstehenden Ansprüche, **dadurch gekennzeichnet, dass** die zweite Fördereinrichtung in die erste Fördereinrichtung mündet.

10. Verfahren zum Fördern von Produkten, enthaltend die Schritte:
A Bereitstellen eines mit einer untergeordneten Fördereinrichtung ausgerüsteten Trägers mittels einer ersten Fördereinrichtung, die sich entlang einem ersten Förderweg bewegt, zum Fördern des Trägers entlang dem ersten Förderweg,
B Platzieren mindestens eines Produkts auf der untergeordneten Fördereinrichtung,
C Fördern des Trägers mit dem auf seiner untergeordneten Fördereinrichtung vorhandenen mindestens einen Produkt zu einer Entladestelle,
D Entladen des mindestens einen Produkts von dem Träger an der Entladestelle durch Antreiben der untergeordneten Fördereinrichtung,
**gekennzeichnet durch** den Schritt
E Bewegen des Trägers von der ersten Fördereinrichtung zu einer zweiten Fördereinrichtung, die sich entlang einem zweiten, von dem ersten Förderweg abweichenden Förderweg bewegt, während Schritt C, um den Träger mit dem auf seiner untergeordneten Fördereinrichtung vorhandenen mindestens einen Produkt entlang dem zweiten Förderweg zu fördern.

## Revendications

1. Installation de transport pour transporter des produits (9; 95), ladite installation de transport comprenant des éléments porteurs (1 ; 91) pour porter des produits, notamment des bagages, un premier convoyeur (2) étant en mouvement le long d'un premier chemin de convoyage pour convoyer les éléments porteurs le long dudit premier chemin de convoyage, au moins une partie desdits éléments porteurs comprenant un convoyeur secondaire (4) pour transporter les produits portés par les éléments porteurs en question dans une direction perpendiculaire au premier chemin de convoyage, et des moyens d'entraînement (31-33 ; 72,75 ; 81) pour entraîner ledit convoyeur secondaire, **caractérisée en ce que** les éléments porteurs peuvent être déplacés depuis le premier convoyeur vers un second convoyeur, lequel est en mouvement le long d'un second chemin de convoyage s'écartant du premier chemin de convoyage afin de convoyer les éléments porteurs le long du second chemin de convoyage.

2. Installation de transport selon la revendication 1, **caractérisée en ce que** les éléments porteurs reposent librement sur le premier convoyeur et/ou le second convoyeur.

3. Installation de transport selon la revendication 1 ou 2, **caractérisée en ce que** la face inférieure la plus extérieure (10) des éléments porteurs est constituée d'au moins une surface de support (10), via laquelle les éléments porteurs peuvent reposer sur le premier convoyeur et/ou le second convoyeur (2 ; 93).

4. Installation de transport selon la revendication 3, **caractérisée en ce que** ladite au moins une surface de support est constituée d'une surface de support centrale s'étendant sur sensiblement toute la largeur du premier convoyeur et/ou du second convoyeur.

5. Installation de transport selon la revendication 1, 2, 3 ou 4, **caractérisée en ce que** seulement certains des éléments porteurs comprennent un convoyeur secondaire.

6. Installation de transport selon l'une quelconque des revendications précédentes, **caractérisée en ce que** l'installation de transport comprend des moyens d'alimentation (19 ; 21,22) pour fournir de l'énergie électrique, lesquels sont disposés le long du premier convoyeur et/ou du second convoyeur, et les éléments porteurs équipés dudit convoyeur secondaire comprennent des moyens de réception (17,18 ; 23) pour recevoir de l'énergie électrique fournie par lesdits moyens d'alimentation pour fournir de l'énergie électrique aux moyens d'entraînement.

7. Installation de transport selon la revendication 6, **caractérisée en ce que** le transfert d'énergie électrique entre lesdits moyens d'alimentation et lesdits moyens de réception se fait sans contact.

8. Installation de transport selon la revendication 6 ou 7, **caractérisée en ce que** les moyens d'alimentation et les moyens de réception sont également prévus pour transférer des signaux électriques de commande pour les moyens d'entraînement.

9. Installation de transport selon l'une quelconque des revendications précédentes, **caractérisée en ce que** le convoyeur secondaire se raccorde au premier convoyeur.

10. Procédé pour transporter des produits, comprenant les étapes de :
A. procurer un élément porteur équipé d'un convoyeur secondaire, au moyen d'un premier convoyeur en mouvement le long d'un premier chemin de convoyage adéquat pour convoyer l'élément porteur le long dudit premier chemin de convoyage ;
B. placer au moins un produit sur le convoyeur secondaire ;
C. convoyer l'élément porteur, avec ledit ou chaque produit présent sur ledit convoyeur secondaire, jusqu'à un point de déchargement ;
D. décharger ledit ou chaque produit depuis l'élément porteur audit point de déchargement en commandant ledit convoyeur secondaire ;
**caractérisée par** l'étape de :
E. déplacer l'élément porteur depuis le premier convoyeur vers un second convoyeur en mouvement le long d'un second chemin de convoyage s'écartant du premier chemin de convoyage au cours de l'étape C afin de convoyer l'élément porteur avec ledit ou chaque produit présent sur ledit convoyeur secondaire le long dudit second chemin de convoyage.
